# EUROPÄISCHE PATENTSCHRIFT

(11) **EP 3 311 974 B1**
(45) Veröffentlichungstag und Bekanntmachung des Hinweises auf die Patenterteilung: **07.08.2019**
(21) Anmeldenummer: 17196840.7
(22) Anmeldetag: 17.10.2017
(51) Int. Cl.: B29C 45/73, B29C 35/00

(54) **ANORDNUNG ZUM WÄRMEAUSTAUSCH UND/ODER ZUR TEMPERIERUNG VON MASCHINENKOMPONENTEN**
ASSEMBLY FOR HEAT EXCHANGE AND/OR CONTROL OF THE TEMPERATURE OF MACHINE COMPONENTS
DISPOSITIF D'ÉCHANGE THERMIQUE ET/OU DE TEMPÉRAGE DES COMPOSANTS DE MACHINES

(30) Priorität: 18.10.2016 DE 102016119843
(43) Veröffentlichungstag der Anmeldung: 25.04.2018
(73) Patentinhaber: Arburg GmbH + Co KG, 72290 Loßburg (DE)
(72) Erfinder: Dr. Duffner, Eberhardt, 72181 Starzach (DE); Bletscher, Rainer, 72270 Baiersbronn (DE); Fest, Walter, 72290 Loßburg (DE)
(74) Vertreter: Reinhardt, Harry

(56) Entgegenhaltungen:
- DE-A1- 1 673 467
- DE-A1- 2 551 423
- DE-A1-102008 025 557
- DE-B3- 10 319 243
- US-A- 3 748 866
- Beckmann-Fleige Hydraulik: "Rückschlagventil - Beschreibung und Bauarten", , 17. Dezember 2016 (2016-12-17), XP055446587, Gefunden im Internet: URL:https://www.bf-hydraulik.com/rueckschl agventil.html [gefunden am 2018-01-31]
- GRIES H: "HEISS UND KALT RICHTIG TEMPERIEREN TEIL 6", PLASTVERARBEITER, HUETHIG GMBH, HEIDELBERG, DE, Bd. 49, Nr. 9, 1. September 1999 (1999-09-01), XP000935458, ISSN: 0032-1338

## Beschreibung

Die Erfindung betrifft eine Anordnung zum Wärmeaustausch und/oder zur Temperierung von Maschinenkomponenten einer Spritzgießmaschine zur Verarbeitung von Kunststoffen und anderen plastifizierbaren Massen wie keramischen und pulverförmigen Massen nach dem Oberbegriff des Anspruches 1.

Aus der dem Oberbegriff des Anspruches 1 zu Grunde liegenden DE 25 51 423 A1 ist eine Einrichtung zum Heizen und/oder Kühlen von Hohlkörpern wie insbesondere von Formen bei der Kunststoffverarbeitung bekannt. Die Einrichtung weist einen Heiz- und Kühlkreislauf mit automatischer Nachspeisung auf, wobei die Nachspeisung des Kühlwassers in Abhängigkeit von Druck und Temperatur des Umlaufsystems über eine Heizung erfolgt, in der ein Druckminderer und ein Membranausgleichsgefäß angeordnet sind. Damit das Kühlmedium Wasser bei Temperaturen bis 130° C nicht siedet, wird eine Grundvorspannung von ca. 2.2 bar erzeugt, wobei die Volumen- / Druckschwankungen von dem Membranausgleichsgefäß aufgenommen werden. Der mittels Druckminderer auf 2.2 bar eingestellte Druck im Nachspeisestrang bleibt konstant, wobei der Druck im inneren Prozesskreislauf je nach Temperatur zwischen 2,2 bar und max. 6 bar schwanken kann. Der Einfluss eines Differenzdrucks wird nicht näher erläutert. Diese Einrichtung weist einen Wärmetauscher auf, wobei die Nachspeisung des Kühlmediums in Abhängigkeit von Druck und Temperatur automatisch erfolgt. Mit Hilfe der Druckminderungseinrichtung und des Membranausgleichsgefäßes kann mit der Einrichtung bei einem niedrigen Atmosphärendruck gearbeitet werden, wobei eine Funktionssicherheit auch bei Temperaturen über 100 Grad Celsius gewährleistet ist. Eine Nutzung der Abwärme zur Temperierung von Maschinenkomponenten ist nicht offenbart, dort wird das geschlossene Umlaufsystem lediglich mit Hilfe des Kühlwassers entweder gekühlt oder beheizt, wobei das Umlaufmedium nicht mit dem Kühlwasser in Berührung kommt.

Aus der DE 20 2009 003 331 U1 ist ein weiteres Kühlsystem für ein Werkzeug einer Spritzgießmaschine bekannt. Das Kühlsystem weist einen Maschinenkreislauf, der durch das Werkzeug verläuft, einen Wasser/Luft-Wärmetauscher, eine Kältemaschine und eine Steuerung auf, wobei in Abhängigkeit der Außentemperatur die Kältemaschine dem Kühlsystem zugeschaltet wird, wenn über den Wasser/Luft-Wärmetauscher nicht genügend Energie abgegeben werden kann. Dadurch ergibt sich ein Kühlsystem, welches geringe Betriebskosten aufweist und die Vorlauftemperatur des Kühlmittels auf einem konstanten und niedrigen Wert hält. Aufgrund minimaler Leckagen im Kühlsystem kann es zu einem Druckabfall und bei Unterschreitung eines Minimaldruckes zu ungeplanten Stillstandzeiten des kompletten Werkzeugs kommen.

Die DE 102 47 868 A1 offenbart ein Verfahren zur Abfuhr thermischer Energie aus einem Kaltwasserkreislauf mit einem wärmeerzeugenden Werkzeug und mit einer Lufttrocknung mit Wärmerückgewinnung. Um zu vermeiden, dass bei Prozessen, welche eine Kühlwassertemperatur unterhalb des Taupunktes benötigen, Feuchtigkeit an der Oberfläche von Werkzeugen kondensiert und somit erhebliche Produktionsstörungen verursacht, wird der Umgebungsluft Wärme entzogen und an den Kaltwasser- und Verdampferkreis abgegeben, wobei gleichzeitig die Verlustwärme zur Erhöhung der Lufttemperatur genutzt wird.

Die oben genannten Erfindungen offenbaren ein Kühlsystem bzw. einen Kühlkreislauf mit einem definierten Kühlmedium. Jedoch treten systembedingt in einem Kühlkreislauf Kühlmediumsverluste auf, die beispielsweise durch Verdunstung, durch Entlüftung der Anlage oder durch minimale Leckagen an Verbindungsstellen verursacht werden können. Diese Verluste führen früher oder später zu einer Verringerung des Systemdrucks bzw. zu einem Druckabfall und im schlimmsten Fall dazu, dass Luft angesaugt wird und in den Kühlkreislauf gelangt und es so zu ungeplanten Stillstandszeiten und/oder zu einer Schädigung der Anlage kommt.

Die US 3 748 866 A offenbart an einer Blasformmaschine einen Primärkreislauf und einen Sekundärkreislauf als auch eine Nachspeisung, aber keine Nutzung der Abwärme.

Die DE 103 19 243 B3 offenbart zur Temperierung eines Spritgießwerkzeugs eine Nutzung von Abwärme zur zumindest teilweise unabhängigen Temperierung, jedoch nicht, dass eine Maschinekomponente durch Abwärme einer weiteren Maschinekomponente temperierbar ist. Stattdessen wird dort die Restwärme der Formkühlung wieder für die Formtemperierung verwendet. Eine Nachspeisung des Kühl- und/oder Temperiermediums ist nicht vorgesehen.

Aus der DE 10 2008 025 557 A1 ist es bekannt, an einer Spritzgießmaschine Abwärme einer weiteren Maschinekomponente zur Temperierung eines Sekundärkreislaufs anzuwenden. Eine zumindest teilweise vom Primär und/oder Sekundärkreislauf unabhängige Temperierung ist nicht offenbart.

Die DE 16 73 467 A1 zeigt an einer Formmaschine eine Nachspeisung aus einem ersten Strömungsmittelkreislauf in einen zweiten Strömungsmittelkreislauf, um Leckverluste gering zu halten. Die Strömungsmittelkreisläufe sind jedoch separiert und nicht mit einem Wärmetauscher zur Kühlung und/oder Temperierung verbunden.

Aus GRIES H: "HEISS UND KALT RICHTIG TEMPERIEREN TEIL 6", PLASTVERARBEI-TER, HUETHIG GMBH, HEIDELBERG, DE, Bd. 49, Nr. 9, 1. September 1999 (1999-09-01), XP000935458, ISSN: 0032-1338 wird zur Temperierung im Formenbau eine Nachspeisung bei einem Primärkreislauf und einem Sekundärkreislauf vorgeschlagen.

Ausgehend von diesem Stand der Technik liegt der vorliegenden Erfindung die Aufgabe zugrunde, einen Wärmeaustausch und/oder eine Temperierung von Maschinenkomponenten sicher, effizient und zuverlässig zu gewährleisten.

Diese Aufgabe wird mit einer Anordnung zum Wärmeaustausch und/oder zur Temperierung von Maschinenkomponenten gemäß den Merkmalen des Anspruchs 1 gelöst. Vorteilhafte Weiterbildungen sind Gegenstand der abhängigen Ansprüche. Die in den Ansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Anordnung zum Wärmeaustausch und/oder zur Temperierung von Maschinenkomponenten einer Spritzgießmaschine weist wenigstens einen geschlossen Sekundärkreislauf mit einem Kühl- und/oder Temperiermedium, wenigstens einen Wärmetauscher und wenigstens eine Pumpe auf. Ferner weist die Anordnung wenigstens einen Primärkreislauf, der den Sekundärkreislauf über den Wärmetauscher kühlt und/oder temperiert, und wenigstens ein Aggregat auf, welches Anschlüsse für Kühl- und/oder Temperierleitungen zumindest des Primärkreislaufs, ggf. aber auch des Sekundärkreislaufs umfasst. Erfindungsgemäß sind wenigstens ein Systemtrenner zwischen Primär- und Sekundärkreislauf sowie wenigstens ein Nachfüllstrang vorgesehen, der mit dem Primarkreislauf in Fluidverbindung steht. Dabei erfolgt eine Nachspeisung und/oder ein Ausgleich des Kühl- und/oder Temperiermediums im Sekundärkreislauf mit Hilfe des Systemtrenners nur bei einem positiven Differenzdruck zwischen Primär- und Sekundärkreislauf über den Nachfüllstrang aus dem Primärkreislauf und damit keine Nachspeisung und/oder kein Ausgleich bei einem negativen Differenzdruck oder einem Differenzdruck von null zwischen Primär- und Sekundärkreislauf, wodurch sich ein Wärmeaustausch und/oder eine Temperierung der Maschinenkomponenten sicher, effizient und zuverlässig ergibt. Ist der Druck im Sekundärkreislauf kleiner als im Primärkreislauf, öffnet der Systemtrenner und es fließt Kühl- und/oder Temperiermedium von dem Primärkreislauf nach. Ist jedoch der Druck im Primärkreislauf kleiner als im Sekundärkreislauf, blockt der Systemtrenner, sodass es zu keiner Vermischung zwischen Primär- und Sekundärkreislauf kommt. Auf ein Ausgleichsgefäß kann dabei verzichtet werden und der Primärkreislauf wird mit dem Sekundärkreislauf über einen Systemtrenner verbunden. Über diese Verbindung wird in den systembedingten Druckgrenzen (bis max. 8 bar) ein Druckgleichgewicht in beiden Kreisläufen hergestellt und bei Bedarf kontinuierlich nachgespeist.

Ferner sind einzelne Maschinenkomponenten unabhängig oder teilweise unabhängig vom Primär- und/oder Sekundärkreislauf miteinander gekoppelt, sodass die Abwärme wenigstens einer weiteren Maschinenkomponente unabhängig oder teilweise unabhängig vom Sekundärkreislauf und ggf. vom Primärkreislauf wenigstens eine Maschinenkomponente temperiert. Dadurch lässt sich Energie einsparen, da sich die Energie der Maschinenkomponenten in Form von Abwärme weiter nutzen lässt, um beispielsweise weitere Maschinenkomponenten zu temperieren. Es muss daher die Maschinenkomponente nicht komplett "von null auf" temperiert werden, sondern es kann die Abwärme von anderen Maschinenkomponenten benutzt werden, um die Maschinenkomponente auf die gewünschte Temperatur zu temperieren. Insofern kann von einer geeigneten Stelle aus der Energiehaushalt über die Maschine hinweg optimiert oder beeinflusst werden, da sich Wärmequellen und Wärmesenken gegenseitig gezielt beeinflussen können. Dabei ist auch eine Ankopplung an das Wärmemanagement im Umfeld der Maschine möglich, wie z.B. eine Ankopplung an das Gebäude oder eine andere bauliche Komponente.

Vorzugsweise ist die weitere baulichen Komponente über einen vom Primärkreislauf und/oder Sekundärkreislauf entkoppelten Kreislauf z.B. über einen Wärmetauscher an eine Wärmequelle oder Wärmesenke wie einen Hausheizungskreislauf und/oder eine Fußbodenheizung und/oder eine Wärmepumpe z.B. des Gebäudes gekoppelt.

Vorteilhaft weist der Sekundärkreislauf wenigstens einen Temperaturfühler auf, welcher die Temperatur des Kühl- und/oder Temperiermediums erfasst und an wenigstens eine Regeleinheit übergibt, die Einfluss auf wenigstens ein Stellglied des Primärkreislaufs nimmt, sodass bei einer abweichenden Temperatur des Kühl- und/oder Temperiermediums im Sekundärkreislauf Parameter, wie z.B. die Temperatur und/oder die Fließgeschwindigkeit und damit auch die Durchflussmenge des Kühl- und/oder Temperiermediums im Primärkreislauf entsprechend angepasst werden können.

Um Beschädigungen der Maschine und/oder Stillstandzeiten als Folge einer Unterschreitung des Minimaldrucks zu verhindern, weist der Sekundärkreislauf vorteilhaft wenigstens eine Minimaldrucküberwachung auf.

Für eine einfache, sichere und kostengünstige Nachspeisung und/oder Ausgleichung des Sekundärkreislauf mit dem Kühl- und/oder Temperiermedium ist der Systemtrenner als ein Rückschlagventil ausgeführt ist. Prinzipiell denkbar sind aber auch andere Bauteile, die eine Nachspeisung und/oder Ausgleichung des Sekundärkreislaufs nur bei positivem Differenzdruck, sowie gleichzeitig keine Vermischung bei negativem Differenzdruck bzw. einem Differenzdruck von null bewirken.

Um die zu kühlenden und/oder zu temperierenden Maschinenkomponenten vor Korrosion und Verschmutzung zu schützen weist der Nachfüllstrang vorteilhaft wenigstens ein Filterelement auf. Weiterhin wird dadurch verhindert, dass durch Schmutz und/oder Ablagerungen der Sekundärkreislauf verstopft und somit eine entsprechende Kühlung und/oder Temperierung nicht mehr gewährleistet ist.

Luft ist im Allgemeinen ein sehr schlechter Wärmeleiter bzw. Wärmetauscher. Im Falle einer ungenügenden Kühlung und/oder Temperierung im Sekundärkreislauf aufgrund von eingeschlossener Luft weist der Sekundärkreislauf vorteilhaft wenigstens einen Entlüfter auf, wodurch die Luft automatisch entweichen kann und so ein besserer Wärmeaustausch mittels des Kühl- und/oder des Temperiermediums erfolgen kann.

Vorzugsweise als Schutzeinrichtung des Sekundärkreislaufs gegenüber mechanischen Verformungen von Komponenten des Kreislaufs bei zu hohen Drücken weist der Sekundärkreislauf wenigstens eine Überdruckabsicherung auf. Dadurch wird zudem eine korrekte Funktion des Kreislaufs gewährleistet, da es bei hohen Drücken bzgl. der Zirkulation des Kühl- und/oder des Temperiermediums zu Problemen kommen kann.

Zur Kühlung und/oder zur Temperierung einer weiteren Maschinenkomponente, vorzugsweise eines Ölbehälters, weist der Sekundärkreislauf in bevorzugter Weise wenigstens einen weiteren Wärmetauscher auf. Prinzipiell denkbar sind für den Betrieb des Wärmetauschers mit dem Ölbehälter z.B. drei Arbeitsbereiche. Im klassischen Fall wird die Abwärme aus dem Ölbehälter dem Sekundärkreislauf zugeführt und über den Primärkreislauf abgeführt. Weiterhin bzw. zusätzlich ist es möglich, die Abwärme weiterer angeschlossener Maschinenkomponenten, wie beispielsweise Servomotoren und/oder Wechselrichter, aus dem Sekundärkreis über den Wärmetauscher dem Öl im Ölbehälter zuzuführen und so das Öl vorzuwärmen. Auch kann die Abwärme des Öls benutzt werden, um weitere Maschinenkomponenten aus dem Sekundärkreis zu temperieren. Die drei verschiedenen Möglichkeiten können ebenfalls in beliebiger Form miteinander kombiniert werden.

Im Falle von größeren Leckagen im Sekundärkreislauf weist der Primärkreislauf vorteilhaft wenigstens eine Volumenstrommessung auf, sodass nachvollzogen werden kann, wieviel Kühl- und/oder Temperiermedium verloren wurde bzw. wie groß in etwa das Leck ist.

Im Folgenden wird die Erfindung anhand eines in den beigefügten Figuren dargestellten Ausführungsbeispiels näher erläutert. Es zeigen:
- Fig. 1: eine schematische Ansicht der erfindungsgemäßen Anordnung als Fluidschalt-plan,
- Fig. 2: eine perspektivische Ansicht von schräg oben eines Aggregats,
- Fig. 3: eine perspektivische Ansicht von schräg oben eines Standfußes einer Spritzgießmaschine mit dem Aggregat gemäß Fig. 2.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

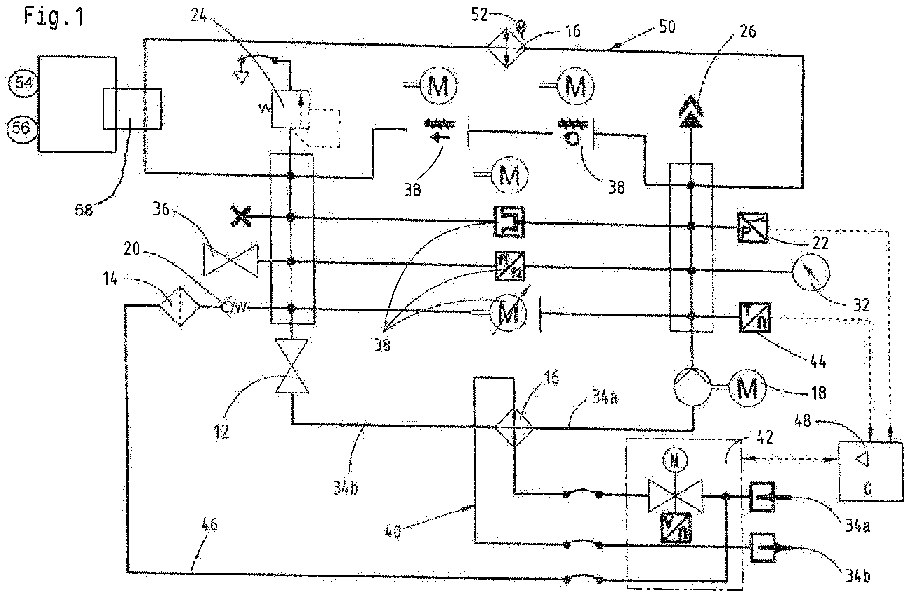

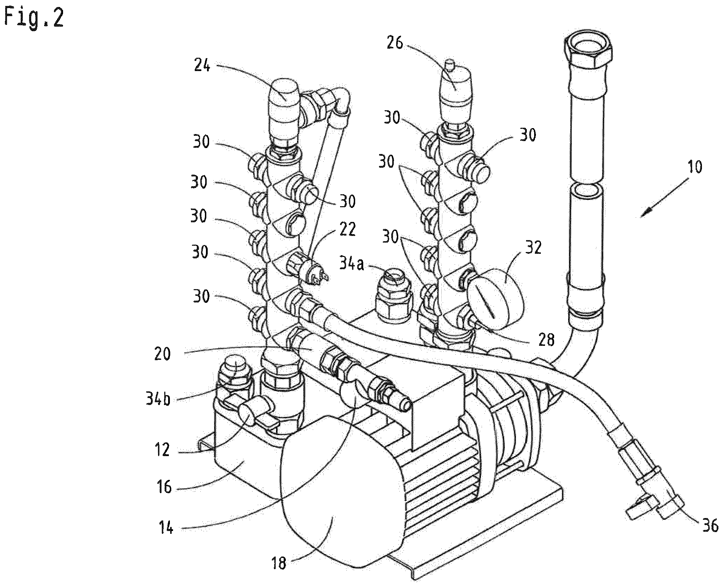

Fig.1 zeigt eine schematische Ansicht einer erfindungsgemäßen Anordnung zum Wärmeaustausch und/oder zur Temperierung von Maschinenkomponenten 38, wie beispielweise Motor, Auswerfer oder Schließeinheit, einer Spritzgießmaschine zur Verarbeitung von Kunststoffen und anderen plastifizierbaren Massen wie keramischen und pulverförmigen Massen als Fluidschaltplan mit wenigstens einem Sekundärkreislauf 50, welcher als geschlossener Kreislauf mit einem Kühl- und/oder Temperiermedium ausgeführt ist und wenigstens einen Wärmetauscher 16 und wenigstens eine Pumpe 18 aufweist. Über den Wärmetauscher 16 wird der Sekundärkreislauf 50 durch wenigstens einen Primärkreislauf 40 gekühlt und/oder temperiert. Weiterhin weist die Anordnung gemäß Fig. 2 wenigstens ein Aggregat 10 auf, wobei das z.B. als Verteiler ausgebildete Aggregat 10 Anschlüsse 30 für Zu- 34a und/oder Abläufe 34b des Sekundärkreislaufs 50 und des Primärkreislaufs 40 aufweist. Zur Erstbefüllung und/oder zur Leerung des Sekundärkreislaufs 50 ist ein Befüllungs-/Entleerungsventil 36 vorgesehen.

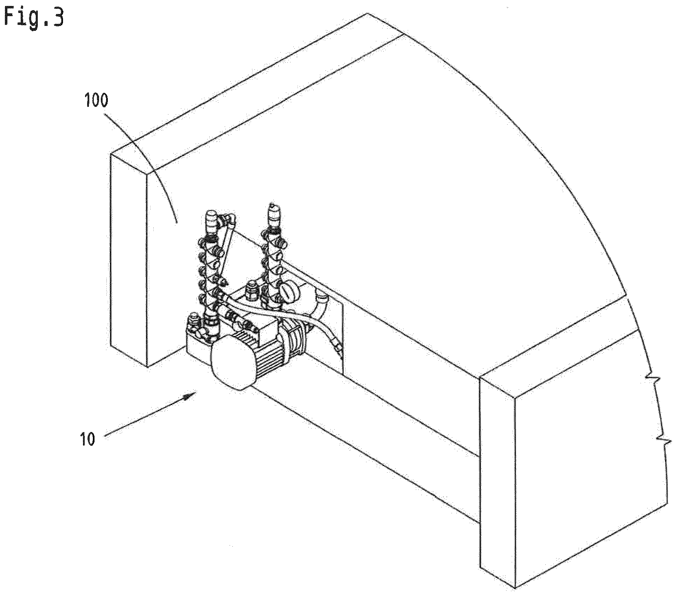

Durch die kompakte Bauweise des Aggregats 10 kann vorteilhaft der für Kühlung und Nachspeisung beanspruchte Bauraum an der Maschine verkleinert werden, sodass gemäß Fig. 3 das Aggregat 10 an einem Standfuß 100, z.B. einer Spritzgießmaschine angebracht werden kann. Damit wird gleichzeitig die Befüllung, Wartung und Nachspeisung der primär- und Sekundärkreisläufe zentralisiert. Über einen vom Primärkreislauf 40 abgezweigten Nachfüllstrang 46 und einen Systemtrenner 20 wird nur bei einem positiven Differenzdruck zwischen Primär- 40 und Sekundärkreislauf 50, beispielsweise bei einer Leckage, Kühl- und/oder Temperiermedium aus dem Primärkreislauf in den Sekundärkreislauf selbsttätig nachgespeist und/oder ausgeglichen, indem der Systemtrenner 20 in diesem Fall öffnet, während hingegen bei einem Differenzdruck kleiner gleich null der Systemtrenner 20 schließt und so keine Vermischung des Sekundär- 50 mit dem Primärkreislauf 40 stattfinden kann, da dann auch keine Nachspeisung oder kein Ausgleich erforderlich ist.

Wenigstens eine Maschinenkomponente 38 ist durch die Abwärme wenigstens einer Wärmequelle - oder auch Wärmesenke - in Form wenigstens einer weiteren Maschinenkomponente 54 und/oder in Form einer weiteren baulichen Komponente 56 unabhängig oder teilweise unabhängig vom Sekundärkreislauf 50 und ggf. vom Primärkreislauf 40 temperierbar ist, wie dies in Fig. 1 links oben schematisch dargestellt ist. Dadurch können zunächst über die Maschine hinweg Maschinenkomponenten 38, 54 miteinander thermisch kommunizieren, indem ein Wärmeeinfluss einer Maschinenkomponente gezielt genutzt werden kann, um den Wärmehaushalt einer anderen Maschinenkomponente zu beeinflussen. Dazu sind diese weiteren Maschinenkomponenten über geeignete Kopplungselemente 58 wie z.B. auch Wärmetauscher, Kontaktelemente oder auch zusätzliche Wärmekreisläufe miteinander in Wirkverbindung gekoppelt.

Zusätzlich besteht aber auch die Möglichkeit den Sekundärkreislauf 50, wie in Fig. 1 für die weitere Maschinenkomponenten 54 und die bauliche Komponente 56 dargestellt, als auch den Primärkreislauf 40, wie zeichnerisch nicht dargestellt, thermisch nicht nur durch die weitere Maschinenkomponente 38 sondern ergänzend oder alternativ durch eine andere bauliche Komponente 56 thermisch zu beeinflussen.

Denkbar ist z.B. eine Ankopplung an das Wärmemanagement im Umfeld der Maschine, wie z.B. eine Ankopplung an das Gebäude oder eine andere bauliche Komponente. Vorzugsweise ist die weitere bauliche Komponente über einen vom Primärkreislauf und/oder Sekundärkreislauf entkoppelten Kreislauf z.B. über einen Wärmetauscher an eine Wärmequelle oder Wärmesenke wie einen Hausheizungskreislauf und/oder eine Fußbodenheizung und/oder eine Wärmepumpe z.B. des Gebäudes gekoppelt.

Insofern kann von einer geeigneten Stelle aus der Energiehaushalt über die Maschine hinweg optimiert oder beeinflusst werden, da sich Wärmequellen und Wärmesenken gegenseitig gezielt beeinflussen können. Dies gilt dabei sowohl für maschineninterne Wärmequellen als auch für maschinenexterne Wärmequellen.

Denkbar ist z.B. eine Temperierung von Maschinenkomponenten mittels Abwärme von Maschinenkomponenten, welche nicht im Primär- und/oder Sekundärkreislauf angeordnet sind. Es ist aber auch denkbar, dass z.B. die mittels Abwärme temperierte Maschinenkomponente im Primär- und/oder Sekundärkreislauf angeordnet ist. Die Temperierung der Maschinenkomponente durch die Abwärme einer anderen Maschinenkomponente erfolgt somit zusätzlich zu einer eventuellen Temperierung der Maschinenkomponente durch den Primär- und/oder Sekundärkreislauf.

Eine Nutzung der Abwärme der Maschinenkomponenten 38, 54 oder einer baulichen Komponente 56 zur Temperierung von einer beliebigen Maschinenkomponente unabhängig oder teilweise unabhängig vom Primärkreislauf 40 und/oder Sekundärkreislauf 50 hat den Vorteil, dass die Maschinenkomponente nicht komplett "von null auf" temperiert werden muss in der Form, dass der Maschinenkomponente Energie von einer anderen beliebigen Maschinenkomponente oder baulichen Komponente 56 zugeführt und/oder umgekehrt Energie abgeführt werden kann.

In einem bevorzugten Ausführungsbeispiel gemäß Fig. 1 weist der Sekundärkreislauf 50 wenigstens einen Temperaturfühler 44 auf, welcher die Temperatur des Kühl- und/oder Temperiermediums erfasst und an wenigstens eine Regeleinheit 48 übergibt, welche Einfluss auf wenigstens ein Stellglied 42, z.B. ein Ventil, des Primärkreislaufs 40 nimmt. Je nach ermittelter Temperatur, z.B. ab maximal 40 Grad Celsius, des Temperaturfühlers 44 regelt die Regeleinheit 48 über das Stellglied 42 beispielsweise die Temperatur und/oder die Fließgeschwindigkeit und damit die Durchflussmenge des Kühl- und/oder Temperiermediums im Primärkreislauf 40 so, beispielweise auf maximal 30 Grad Celsius bzw. maximal 8 bar, dass die Temperatur im Sekundärkreislauf 50 wieder den gewünschten Wert einnimmt.

Grundsätzlich kann über das Stellglied 42 auch der Druck im Primärkreislauf 40 beeinflusst, also im Rahmen der Drucküberwachung erhöht oder abgesenkt werden. Über den Systemtrenner 20 wird damit gleichzeitig auch der Druck im Sekundärkreislauf 50 beeinflusst. Ein höherer Druck im Primärkreislauf 40 führt damit zu einem höheren Druck im Sekundärkreislauf 50, wodurch eine größere Menge an Kühl- und/oder Temperiermedium im Sekundärkreislauf zur Verfügung steht, was damit auch die Temperatur im Sekundärkreislauf beeinflussen kann.

Der Sekundärkreislauf 50 weist bevorzugt wenigstens eine Minimaldrucküberwachung 22 auf, welche bei einer Unterschreitung des eingestellten Minimaldrucks, z.B. von 0,07 MPa, eine Schädigung der Einrichtung durch Abschalten der Maschine verhindert und beispielsweise als ein Membran-Druckschalter ausgeführt ist.

Für eine einfache, sichere und kostengünstige Trennung von Primär- 40 und Sekundärkreislauf 50 ist der Systemtrenner 20 vorzugsweise als ein Rückschlagventil ausgeführt.

Bevorzugt zum Schutz vor Korrosion und Verschmutzung durch eine Nachspeisung über den Nachfüllstrang 46 ist im Nachfüllstrang wenigstens ein Filterelement 14 vorgesehen, welches z.B. als ein Schmutzfänger ausgeführt ist.

Luft ist bekanntlich ein schlechter Wärmeleiter. Durch einen zu hohen Anteil an Luft im Sekundärkreislauf 50 kann die gewünschte Kühl- und/oder Temperierleistung stark beeinflusst werden. Daher weist im Ausführungsbeispiel der Sekundärkreislauf 50 wenigstens einen Entlüfter 26 auf, beispielsweise einen automatischen Schnellentlüfter, über den eventuell eingeschlossene Luft entweichen kann.

Zum Schutz vor einer Beschädigung des Sekundärkreislaufs 50 und/oder der Maschinenkomponenten 38 weist der Sekundärkreislauf 50 ferner wenigstens eine Überdruckabsicherung 24 auf, welche z.B. als ein Überdruckventil ausgeführt ist und beispielsweise bei einem Druck von 1,0 MPa öffnet und Druck abbaut.

Im Ausführungsbeispiel weist der Sekundärkreislauf 50 wenigstens einen weiteren Wärmetauscher 16 zur Kühlung und/oder zur Temperierung einer weiteren Maschinenkomponente 38 auf, beispielsweise eines Ölbehälters 52. Über weitere Wärmetauscher 16 für weitere Maschinenkomponenten 38 lassen sich einzelne Maschinenkomponenten 38 getrennt bzw. unabhängig oder teilweise unabhängig vom Primär- 40 und/oder Sekundärkreislauf 50 über Wärmetauscher 16 miteinander koppeln und temperieren. Prinzipiell lässt sich so einer beliebigen Maschinenkomponente 38 Energie von einer anderen beliebigen Maschinenkomponente 38 zuführen und/oder umgekehrt Energie abführen, beispielsweise ist es möglich, die Abwärme einer beliebigen Maschinenkomponente 38 zum Anwärmen des Ölbehälters 52 zu verwenden und umgekehrt. Denkbar ist auch eine Kopplung des Sekundärkreislaufs 50 und/oder eines beliebigen, vom Primärkreislauf 40 und/oder Sekundärkreislauf 50 entkoppelten Kreislaufs über einen Wärmetauscher 16 an beispielsweise einen Hausheizungskreislauf und/oder eine Fußbodenheizung.

Zur Trennung der Nachspeisung vom Primärkreislauf 40 bei größeren Leckagen im Sekundärkreislauf 50 weist der Primärkreislauf 40 ggf. wenigstens eine Volumenstrommessung auf. Hierzu ist die Regeleinheit 48 einerseits mit dem Stellglied 42 bidirektional verbunden, andererseits steht die Regeleinheit 48 auch mit der Minimaldrucküberwachung 22 in Verbindung.

### Bezugszeichenliste

- 10: Aggregat
- 12: Sperrventil
- 14: Filterelement
- 16: Wärmetauscher
- 18: Pumpe
- 20: Systemtrenner
- 22: Minimaldrucküberwachung
- 24: Überdruckabsicherung
- 26: Entlüfter
- 28: Temperatursensor
- 30: Anschlüsse
- 32: Manometer
- 34a: Zulauf (kalt)
- 34b: Ablauf (warm)
- 36: Befüllungs-/Entleerungsventil
- 38: Maschinenkomponente
- 40: Primärkreislauf
- 42: Stellglied
- 44: Temperaturfühler
- 46: Nachfüllstrang
- 48: Regeleinheit
- 50: Sekundärkreislauf
- 52: Ölbehälter
- 54: weitere Maschinenkomponente
- 56: bauliche Komponente
- 58: Koppelelement
- 100: Standfuß

## Patentansprüche

1. Anordnung zum Wärmeaustausch und/oder zur Temperierung von Maschinenkomponenten (38) einer Spritzgießmaschine zur Verarbeitung von Kunststoffen und anderen plastifizierbaren Massen wie keramischen und pulverförmigen Massen mit
- wenigstens einem Sekundärkreislauf (50), der ein geschlossener Kreislauf mit einem Kühl- und/oder Temperiermedium ist und wenigstens einen Wärmetauscher (16) und wenigstens eine Pumpe (18) aufweist,
- wenigstens einem Primärkreislauf (40), der den Sekundärkreislauf (50) über den Wärmetauscher (16) kühlt und/oder temperiert,
- wenigstens einer Maschinenkomponente, die an den Primär- und/oder Sekundärkreislauf gekoppelt ist,
- wenigstens einem Aggregat (10), wobei das Aggregat (10) Anschlüsse für Zu- und/oder Abläufe (34a, 34b; 30) des Primärkreislaufs (40) aufweist,
- wenigstens einem Systemtrenner (20) zwischen Primärkreislauf (40) und Sekundärkreislauf (50),
- wenigstens einem Nachfüllstrang (46), der mit dem Primärkreislauf (40) in Fluidverbindung steht,
- wobei eine Nachspeisung und/oder ein Ausgleich des Kühl- und/oder Temperiermediums im Sekundärkreislauf (50) mit Hilfe des Systemtrenners (20) bei einem positiven Differenzdruck zwischen Primärkreislauf (40) und Sekundärkreislauf (50) über den Nachfüllstrang (46) aus den Primärkreislauf (40) erfolgt,
**dadurch gekennzeichnet, dass** eine Nachspeisung und/oder ein Ausgleich nur bei einem positiven Differenzdruck zwischen Primär- (40) und Sekundärkreislauf (50) erfolgt und dass die wenigstens eine Maschinenkomponente (38) durch Abwärme wenigstens einer Wärmequelle in Form wenigstens einer weiteren Maschinenkomponente (54) und/oder in Form einer weiteren baulichen Komponente (56) unabhängig oder teilweise unabhängig vom Sekundärkreislauf (50) und ggf. im Primärkreislauf (40) temperierbar ist.

2. Anordnung nach Anspruch 1, **dadurch gekennzeichnet, dass** die weitere bauliche Komponente (56) über einen vom Primärkreislauf (40) und/oder Sekundärkreislauf (50) entkoppelten Kreislauf über einen Wärmetauscher (16) an eine Wärmequelle oder Wärmesenke wie einen Hausheizungskreislauf und/oder eine Fußbodenheizung gekoppelt ist.

3. Anordnung nach Anspruch 1 oder 2, **dadurch gekennzeichnet, dass** wenigstens eine Regeleinheit (48) vorgesehen ist und dass der Sekundärkreislauf (50) wenigstens einen Temperaturfühler (44) aufweist, welcher die Temperatur des Kühl- und/oder Temperiermediums erfasst und an die wenigstens eine Regeleinheit (48) übergibt, welche Einfluss auf wenigstens das Stellglied (42) des Primärkreislaufs (40) nimmt.

4. Anordnung nach einem der vorhergehenden Ansprüche, **dadurch gekennzeichnet, dass** der Sekundärkreislauf (50) wenigstens eine Minimaldrucküberwachung (22) aufweist.

5. Anordnung nach einem der vorhergehenden Ansprüche, **dadurch gekennzeichnet, dass** der Systemtrenner (20) als ein Rückschlagventil ausgeführt ist.

6. Anordnung nach einem der vorhergehenden Ansprüche, **dadurch gekennzeichnet, dass** der Nachfüllstrang (46) wenigstens ein Filterelement (14) aufweist.

7. Anordnung nach einem der vorhergehenden Ansprüche, **dadurch gekennzeichnet, dass** der Sekundärkreislauf (50) wenigstens einen Entlüfter (26) aufweist.

8. Anordnung nach einem der vorhergehenden Ansprüche, **dadurch gekennzeichnet, dass** der Sekundärkreislauf (50) wenigstens eine Überdruckabsicherung (24) aufweist.

9. Anordnung nach einem der vorhergehenden Ansprüche, **dadurch gekennzeichnet, dass** der Sekundärkreislauf (50) wenigstens einen weiteren Wärmetauscher (16) aufweist, über den die weitere Maschinenkomponente (38, 54), vorzugsweise ein Ölbehälter (52), temperierbar ist, oder dass die weitere Maschinenkomponente (38), vorzugsweise über den weiteren Wärmetauscher (16) den Sekundärkreislauf temperiert.

10. Anordnung nach einem der vorhergehenden Ansprüche, **dadurch gekennzeichnet, dass** der Primärkreislauf (40) wenigstens eine Volumenstrommessung aufweist.

## Claims

1. Assembly for heat exchange and/or for temperature control of machine components (38) of an injection moulding machine for processing plastics and other plastifiable materials such as ceramic and powdery materials, comprising
- at least one secondary circuit (50), which is a closed circuit comprising a cooling and/or tempering medium and comprises at least one heat exchanger (16) and at least one pump (18),
- at least one primary circuit (40), which cools and/or heats the secondary circuit (50) via the heat exchanger (16),
- at least one machine component, which is coupled to the primary and/or secondary circuit,
- at least one unit (10), the unit (10) having connections for inlets and/or outlets (34a, 34b; 30) of the primary circuit (40),
- at least one system separator (20) between the primary circuit (40) and the secondary circuit (50),
- at least one refill strand (46) which is in fluid connection with the primary circuit (40),
- wherein replenishment and/or compensation of the cooling and/or temperature control medium in the secondary circuit (50) is effected by means of the system separator (20) in the event of a positive differential pressure between the primary circuit (40) and the secondary circuit (50) via the refill line (46) from the primary circuit (40),
**characterized in that** replenishment and/or equalization only takes place in the case of a positive differential pressure between the primary circuit (40) and the secondary circuit (50) and
**in that** the at least one machine component (38) can be tempered by waste heat from at least one heat source in form of at least one further machine component (54) and/or in the form of a further structural component (56) independently or partially independently of the secondary circuit (50) and, if required, in the primary circuit (40).

2. Assembly according to claim 1, **characterized in that** the further structural component (56) is coupled via a circuit decoupled from the primary circuit (40) and/or secondary circuit (50) via a heat exchanger (16) to a heat source or heat sink such as a domestic heating circuit and/or an underfloor heating system.

3. Assembly according to claim 1 or 2, **characterized in that** at least one control unit (48) is provided and **in that** the secondary circuit (50) has at least one temperature sensor (44), which detects the temperature of the cooling and/or temperature control medium and transfers it to the at least one control unit (48), which influences at least the actuator (42) of the primary circuit (40).

4. Assembly according to one of the preceding claims, **characterized in that** the secondary circuit (50) has at least one minimum pressure monitoring device (22).

5. Assembly according to one of the preceding claims, **characterized in that** the system separator (20) is designed as a non-return valve.

6. Assembly according to one of the preceding claims, **characterized in that** the refill strand (46) comprises at least one filter element (14).

7. Assembly according to one of the preceding claims, **characterized in that** the secondary circuit (50) comprises at least one breather (26).

8. Assembly according to one of the preceding claims, **characterized in that** the secondary circuit (50) comprises at least one overpressure protection (24).

9. Assembly according to one of the preceding claims, **characterized in that** the secondary circuit (50) comprises at least one further heat exchanger (16), via which the further machine component (38, 54), preferably an oil container (52), can be tempered, or **in that** the further machine component (38), preferably via the further heat exchanger (16), tempers the secondary circuit.

10. Assembly according to one of the preceding claims, **characterized in that** the primary circuit (40) comprises at least one volumetric flow measurement.

## Revendications

1. Dispositif pour l'échange de chaleur et/ou la régulation thermique de composants de machine (38) d'une machine de moulage par injection pour le traitement de matières plastiques et d'autres masses plastifiables comme des masses céramiques et pulvérulentes, comportant
- au moins un circuit secondaire (50), qui est un circuit fermé avec un milieu de refroidissement et/ou de régulation thermique et qui comprend au moins un échangeur de chaleur (16) et au moins une pompe (18),
- au moins un circuit primaire (40), qui refroidit et/ou régule thermiquement le circuit secondaire (50) au moyen de l'échangeur de chaleur (16),
- au moins un composant de machine, qui est couplé au circuit primaire et/ou
secondaire,
- au moins un élément complémentaire (10), cet élément complémentaire (10) comprenant des raccords pour des arrivées et/ou des sorties (34a, 34b ; 30) du circuit primaire (40),
- au moins un séparateur de système (20) entre le circuit primaire (40) et le circuit secondaire (50),
- au moins une ligne de réalimentation (46), qui est en liaison fluidique avec le circuit primaire (40),
- dans lequel une alimentation et/ou un équilibrage du milieu de refroidissement et/ou de régulation thermique s'effectue dans le circuit secondaire (50) à l'aide du séparateur de système (20) en cas de différence de pression positive entre le circuit primaire (40) et le circuit secondaire (50) au moyen de la ligne de réalimentation (46) à partir du circuit primaire (40),
**caractérisé en ce qu'**une alimentation et/ou un équilibrage se produit seulement en cas de différence de pression positive entre le circuit primaire (40) et le circuit secondaire (50) et **en ce que** le ou les composant(s) de machine (38) peut/peuvent être régulé(s) thermiquement par rejet thermique d'au moins une source de chaleur sous la forme d'au moins un composant de machine supplémentaire (54) et/ou sous la forme d'un composant structurel supplémentaire (56), de manière indépendante ou partiellement indépendante du circuit secondaire (50) et, le cas échéant, dans le circuit primaire (40).

2. Dispositif selon la revendication 1, **caractérisé en ce que** le composant structurel supplémentaire (56) est couplé par l'intermédiaire d'un circuit non couplé au circuit primaire (40) ou au circuit secondaire (50), au moyen d'un échangeur de chaleur (16), à une source de chaleur ou à une source de froid tel qu'un circuit de chauffage domestique et/ou un chauffage au sol.

3. Dispositif selon la revendication 1 ou 2, **caractérisé en ce qu'**au moins une unité de réglage (48) est prévue et **en ce que** le circuit secondaire (50) comprend au moins un mesureur de température, lequel mesure la température du milieu de refroidissement et/ou de régulation thermique et la transmet à l'unité ou aux unités de réglage (48), laquelle ou lesquelles influe(nt) au moins sur l'organe de réglage (42) du circuit primaire (40).

4. Dispositif selon l'une des revendications précédentes, **caractérisé en ce que** le circuit secondaire (50) comprend au moins une surveillance de pression minimale (22).

5. Dispositif selon l'une des revendications précédentes, **caractérisé en ce que** le séparateur de système est réalisé sous la forme d'un clapet anti-retour.

6. Dispositif selon l'une des revendications précédentes, **caractérisé en ce que** la ligne de remplissage (46) comprend au moins un élément formant filtre (14).

7. Dispositif selon l'une des revendications précédentes, **caractérisé en ce que** le circuit secondaire (50) comprend au moins un aérateur (26).

8. Dispositif selon l'une des revendications précédentes, **caractérisé en ce que** le circuit secondaire (50) comprend au moins une protection de surpression (24).

9. Dispositif selon l'une des revendications précédentes, **caractérisé en ce que** le circuit secondaire (50) comprend au moins un échangeur de chaleur supplémentaire (16), grâce auquel le composant de machine supplémentaire (38, 54), de préférence un conteneur d'huile (52), peut être régulé thermiquement, ou **en ce que** le composant de machine supplémentaire (38) est de préférence régulé thermiquement par l'échangeur de chaleur supplémentaire (16).

10. Dispositif selon l'une des revendications précédentes, **caractérisé en ce que** le circuit primaire (40) comprend au moins un débitmètre.
